# EUROPEAN PATENT APPLICATION

(11) **EP 4 300 949 A1**
(43) Date of publication of application: **03.01.2024**
(21) Application number: 22182365.1
(22) Date of filing: 30.06.2022
(51) Int. Cl.: H04N 7/18, B62J 27/00, B62J 45/00, B62J 50/00

(54) **METHOD FOR OPERATING A TRAFFIC NOTIFICATION DEVICE FOR A BICYCLE, DATA PROCESSING APPARATUS, COMPUTER PROGRAM, COMPUTER-READABLE STORAGE MEDIUM, TRAFFIC NOTIFICATION DEVICE AND BICYCLE ASSEMBLY**

(71) Applicant: Alps Alpine Europe GmbH, 85716 Unterschleissheim (DE)
(72) Inventor: GRONOSTAY, Heiko, 85716 Unterschleissheim (DE)
(74) Representative: Maiwald GmbH

(57) **Abstract**

A method for operating a traffic notification device (28) for a bicycle (26) is presented. The traffic notification device (28) is configured for being mounted on the bicycle (26) and comprises a camera unit (38) for capturing images of a traffic situation in the surroundings of the bicycle (26). The method comprises triggering the camera unit (38) to operate in a first operational mode, wherein in the first operational mode the camera unit (38) captures at least one image being characterized by a first image quality parameter. Moreover, according to the method, a mode switching information is detected or received. Additionally, the method comprises triggering the camera unit (38) to operate in a second operational mode, wherein in the second operational mode the camera unit (38) captures at least one image being characterized by a second image quality parameter. Furthermore, a data processing apparatus comprising means for carrying out the method, a corresponding computer program and a corresponding computer-readable storage medium are described. Also a traffic notification device (28) for a bicycle (26) and a bicycle assembly (24) comprising such a traffic notification device (28) are explained.

## Description

The invention relates to a method for operating a traffic notification device for a bicycle.

Moreover, the invention is directed to a data processing apparatus comprising means for carrying out such a method.

Furthermore, the invention relates to a computer program and a computer-readable storage medium respectively comprising instructions which, when executed by a computer, cause the computer to carry out the above method.

Additionally, the invention is directed to a traffic notification device for a bicycle.

The invention relates also to a bicycle assembly comprising a bicycle and such a traffic notification device.

Traffic notification devices being configured for being mounted on bicycles are known. Such devices may comprise a camera unit for capturing images of a traffic situation in the surroundings of the bicycle. The captured images may be provided to a user of the bicycle. Usually the images are video images.

In order to be able to provide accurate and detailed notifications concerning the surrounding traffic to the user of the bicycle, a general aim is to capture images of high quality. However, this shortens a battery life of the notification device in a generally undesired manner.

It is therefore an objective of the present invention to solve or at least mitigate the conflict of objectives between high image quality and long battery life. This means that a traffic notification device shall be provided which can provide accurate and detailed notifications concerning the surrounding traffic based on high quality images and, at the same time, has a comparatively long battery life.

The problem is solved by a method for operating a traffic notification device for a bicycle. The traffic notification device is configured for being mounted on the bicycle and comprises a camera unit for capturing images of a traffic situation in the surroundings of the bicycle. The method comprises:
- triggering the camera unit to operate in a first operational mode, wherein in the first operational mode the camera unit captures at least one image being characterized by a first image quality parameter,
- detecting or receiving a mode switching information, and
- triggering the camera unit to operate in a second operational mode, wherein in the second operational mode the camera unit captures at least one image being characterized by a second image quality parameter.

Thus, the traffic notification device may be operated in two distinct operational modes. One of these operational modes may be configured to provide images of a comparatively high quality. This operational mode may be designated as a high image quality mode. The other one of the operational modes may be configured to provide images of comparatively low quality. Consequently, the latter operational mode may be designated as a low image quality mode. This has also the effect that in the latter operational mode comparatively little power is consumed. The latter operational mode may, thus, be designated as a low power mode or an energy saving mode. Consequently, images of comparatively high quality can be captured if needed. Based thereon, accurate and detailed notifications concerning the surrounding traffic can be provided. In situations in which accurate and detailed notifications are not necessary, the camera unit may be operated in the low power mode. Altogether, using this method, the traffic notification device can provide accurate and detailed notifications while at the same time having a long battery life.

It is noted that the battery being used for powering the components of the traffic notification device may form part of the traffic notification device, i.e. may be integrated into the traffic notification device. Alternatively, the battery may be external to the traffic notification device and connected to the traffic notification device such that the components of the traffic notification device may be powered using the external battery. In both cases the traffic notification device is able to provide accurate and detailed notifications while at the same time enjoying a long battery life of the associated battery.

The above-defined first operational mode and the above-defined second operational mode cover the following two alternatives: Either the first image quality parameter designates an image of higher quality as compared to the second image quality parameter. Then, the first operational mode is the high image quality mode and the second operational mode is the low image quality mode. This implies that the first operational mode consumes more energy than the second operational mode. In other words, the second operational mode is the low power mode or energy saving mode. Alternatively, the second image quality parameter designates an image of higher quality as compared to the first image quality parameter. Then, the second operational mode is the high image quality mode and the first operational mode is the low image quality mode. This implies that the second operational mode consumes more energy than the first operational mode. In other words, the first operational mode is the low power mode or energy saving mode.

It is noted that, for achieving the combination of accurate and detailed notifications and a long battery life, the camera unit may be triggered to switch forth and back between the high image quality mode and the low image quality mode. Thus, the first and second operational modes may be applied in a loop or in an alternating manner. It is understood that a mode switching information needs to be detected or received for every mode change. The corresponding mode switching information may be generated automatically, i.e. without the interaction of a user of the traffic notification device or manually, i.e. by an action of the user of the traffic notification device. In both cases, the image quality and the corresponding power consumption can be situationally adapted such that accurate and detailed notifications are provided when needed and additionally the battery life of the traffic notification device is rather long.

The camera unit is preferably configured for being mounted on a bicycle in a rearward orientation.

In an alternative, the method comprises triggering only one first operational mode and only one second operational mode. This means that the camera unit can exclusively operate according to one first operational mode and one second operational mode. Both operational modes are fully defined, e.g. by the corresponding image quality parameter.

In another alternative, the first operational mode and the second operational mode may be incremental operational modes covering a bandwidth of operational modes between a starting operational mode and a final operational mode. In this alternative, the camera unit is triggered to incrementally or quasi-continuously switch from the starting operational mode into the final operational mode thereby temporarily being operated in one or more intermediate operational modes. In this context, pairs out of the group comprising the starting operational mode, the final operational mode and the intermediate operational mode form first operational modes and one or more second operational modes. In this alternative, the image quality and the corresponding power consumption can be incrementally or quasi-continuously adapted such that it is appropriate for a current operational situation.

According to a variant, the method further comprises receiving at least one image captured by the camera unit, analyzing the at least one image and deducting a mode switching information from the at least one image. Thus, the mode switching information is a function of the captured image, more precisely of characteristics of the captured image such as a content of the captured image. In other words, the operational mode is determined based on the captured image. This may be done in a fully automatic manner. Consequently, the camera unit and the traffic notification device are always operated in an operational mode being appropriated with respect to the surrounding traffic. The user does not need to think about the correct choice of an operational mode or take any action.

In an example, the mode switching information is the presence or absence of a road user in the analyzed image. In a case in which the analyzed image does not show a road user, it is not necessary to provide any traffic notification. Consequently, the camera unit, and thus also the traffic notification device, can be operated in the power saving mode. This may be the case if a detected road user disappears from the image or if no road user is present at all. It is noted that the first operational mode and the second operational mode are designed such that the mode being configured for providing images of a comparatively low quality still provides images which are of sufficient quality for determining the presence or absence of a road user.

According to an embodiment, analyzing the at least one image comprises applying a machine vision technique. Thus, the image may be analyzed automatically within a short time and with high reliability. As a consequence thereof, the mode switching information, e.g. the presence or absence of a road user, may be deducted automatically and with high precision. It is noted that in a case in which more than one road user is shown in the at least one image, of course all road users may be detected.

In an example, applying a machine vision technique comprises applying a segmentation technique. This means that the received at least one image is divided into segments. In a preferred variant, one segment is generated for each road user. The remaining segments of the received image are not relevant for deducting the mode switching information. This enhances the computational efficiency of the machine vision technique.

According to a variant, a trained convolutional neural network is used for performing the segmentation. This neural network may be trained with images showing vehicles, e.g. cars and trucks, which are the most relevant road users to be detected in the captured image. Such training data is publicly available.

According to another variant, the segmentation is done by generating a differential image. This means that a difference is calculated between two temporally sequential images. The difference just shows the portions of the image where objects being shown in the image have moved. Thus, a segment may be defined for each moving object. Generating a differential image is a very simple and computationally efficient method for generating segments comprising moving objects. Such objects are relevant for deducting the mode switching information.

The machine vision technique may comprise an optical flow technique. The optical flow technique is known as such. This technique uses a set of temporally sequential images which may be designated as frames. Each pixel of each of these images is either defined by a brightness value and a color value or by a brightness value, a red color value, a green color value, and a blue color value. The optical flow technique searches for pixels having the same characteristic, i.e. the same values as explained above, in subsequent images. Subsequently, a path or a trajectory of each pixel may be determined over the set of temporally sequential images. The optical flow technique may be used for segmenting the images. Moreover, the optical flow technique is especially performant with respect to the detection of moving objects in a set of images. Consequently, using the optical flow technique, segments comprising moving road users may be generated in an efficient and reliable manner. Based thereon, a mode switching information may be derived efficiently and reliably. It is additionally noted that the optical flow technique is very tolerant with respect to color and brightness. This means that the optical flow technique is also very tolerant with respect to camera interference and artefacts. Thus, the optical flow technique produces reliable results independent from light conditions which may be influenced for example by weather conditions.

The first image quality parameter and the second image quality parameter may be at least one of an image resolution parameter and a frame rate parameter. These parameters define relevant characteristics of video images. Moreover, these parameters have a strong influence on the power consumption of the camera unit and, thus, on the battery life of the traffic notification device.

In an example, a comparatively low image resolution parameter may be 480p or 720p, i.e. the images have a vertical resolution of 480 pixels or 720 pixels. The corresponding horizontal resolution depends on the image format, e.g. 4:3 or 16:9.

In another example, a comparatively high image resolution parameter may be 720p or 1920p. It is understood that the comparatively high image resolution parameter needs to be higher than the comparatively low image resolution parameter.

In a further example, a comparatively low frame rate parameter may be 30 frames per second.

In another example, a comparatively high frame rate parameter may be 60 frames per second.

In a variant, the method further comprises providing the at least one captured image to a user of the bicycle. Consequently, the user is able to observe the traffic in its surroundings. This functionality can be designated as a digital rear view mirror. Traffic notifications may be provided as an overlay over the image or in combination with the image. In such a configuration the user may perceive the current traffic easily and quickly. This enhances road safety.

The image may be provided to a screen of a mobile electronic device such as a smart phone of the user, wherein the mobile electronic device may be mounted on a handle bar of the bicycle.

According to a further variant, the at least one captured image may be up-scaled before being provided to the user of the bicycle. This allows to display images of high quality based on images of comparatively low quality.

In another embodiment, the method further comprises receiving at least one image captured by the camera unit. Thereafter, the at least one image is analyzed and a risk level indicator is deducted. The risk level indicator describes a risk of interference between the bicycle and a road user in the analyzed image. These steps are performed if the camera unit is operated in the one out of the first operational mode and the second operational mode in which the corresponding first or second image quality parameter relates to the comparatively higher image quality. Preferably, not only one image but rather a set or a stream of images is received. The steps of receiving the at least one image and analyzing the received image may be summarized as monitoring a traffic situation. It is noted that the operational modes may be designed such that the risk level indicator may only be derived from the images being of the comparatively higher image quality. Thus, in order to derive the risk level indicator, the camera unit needs to be triggered to operate in the one out of the first operational mode and the second operational mode in which the corresponding first or second image quality parameter relates to the comparatively higher image quality.

According to an example, analyzing the received image and deducting the risk level indicator comprises estimating at least one of a time to pass the user of the bicycle, a passing distance and a passing speed based on the received image. The estimated time to pass is the estimated time until a road user detected in the image passes by the user of the bicycle. The estimated passing distance is the estimated lateral distance between the user of the bicycle and the road user detected in the image when the latter passes by the user of the bicycle. The estimated passing speed is the estimated relative velocity between the user of the bicycle and the road user detected in the image when passing by the user of the bicycle. These parameters are well-suitable for deducting a risk level indicator since they all have a major influence on the risk of interference.

The risk level indicator may be calculated as a product or a sum of the time to pass the user of the bicycle, the passing distance and the passing speed. In this product or sum, the time to pass the user of the bicycle, the passing distance and the passing speed may be weighed.

In the present context, an interference between road users is to be understood as an undesired influence of one road user, e.g. the road user detected in the image, on the other road user, e.g. the user of the traffic notification device. A simple example of an interference is a collision between the road users. However, also an entry into a safety zone of the respective other road user is an interference since the affected road user may perform an evasive maneuver due to such an entry.

According to a variant, analyzing the at least one image comprises applying a machine vision technique. Thus, the image may be analyzed automatically within a short time and with a high reliability. As a consequence thereof, the risk level indicator may be deducted automatically. Due to the accurate nature of machine vision techniques, also the deducted risk level indicator is accurate. It is noted that in a case in which more than one road user is shown in the at least one image, a risk level indicator is deducted for each of these road users.

As before, applying a machine vision technique may comprise applying a segmentation technique. This means that the received at least one image is segmented before the risk level indicator is deducted. In a preferred variant, one segment is generated for each road user. The remaining segments of the received image are not relevant for generating the risk level indicator and, thus, may be ignored. This enhances the computational efficiency of the machine vision technique.

Again, a trained convolutional neural network is used for performing the segmentation. Alternatively, the segmentation may be done by generating a differential image. Reference is made to the above explanations concerning the trained convolutional neural network and the differential image.

The machine vision technique may also comprise an optical flow technique. The trajectories or paths generated by the optical flow technique may be used for deducting the risk level indicator. For example, the paths or trajectories may be extrapolated such that the time to pass, the passing speed and the passing distance may be estimated. Thus, the risk level indicator may be determined with high efficiency, accuracy and reliability. It is noted that the optical flow technique may be used for both segmentation and deduction of the risk level indicator. In such a case, only the segments comprising a road user may be considered for deducting the risk level indicator. Beyond that, reference is made to the above explanations concerning the optical flow technique.

A risk level indicator falling below a risk level threshold may be a mode switching information. This especially applies if the camera unit is operated in the one out of the first operational mode and the second operational mode in which the corresponding first or second image quality parameter relates to the comparatively higher image quality. The risk level threshold may describe a risk level which is the lowest risk level considered to be relevant for generating a traffic notification. Risk level indicators falling below the risk level threshold are considered to be not relevant. This means that the associated risk is considered to be so low that the user of the traffic notification device does not need to be aware thereof. Consequently, the camera unit may be switched into the low energy mode. This enhances the battery life.

In an example, the one out of the first operational mode and the second operational mode in which the corresponding first or second image quality parameter relates to the comparatively lower image quality is a default operational mode. Consequently, the traffic notification device has a comparatively long battery life.

The method according to the invention may be computer-implemented.

The problem is additionally solved by a data processing apparatus comprising means for carrying out the method according to the invention. Such a data processing apparatus may also be called a camera controller. Using such a data processing apparatus has the effect that accurate and detailed traffic notifications may be provided to a user of a traffic notification device if the situation requires such accurate and detailed traffic notifications. Otherwise, the data processing apparatus has the effect that only comparatively little energy is consumed by the camera unit and the traffic notification device.

Also, the problem is solved by a computer program comprising instructions which, when the computer program is executed by a computer, cause the computer to carry out the method according to the invention. Using such a computer program, a corresponding traffic notification device, more precisely a corresponding camera unit, can provide accurate and detailed notifications while at the same time having a long battery life.

Furthermore, the problem is solved by a computer-readable storage medium comprising instructions which, when executed by a computer, cause the computer to carry out the method according to the invention. Using such a computer-readable storage medium, a corresponding traffic notification device, more precisely a corresponding camera unit, can provide accurate and detailed notifications while at the same time having a long battery life.

Additionally, the problem is solved by a traffic notification device for a bicycle. The traffic notification device is configured for being mounted on the bicycle. The traffic notification device comprises a camera unit for capturing images of a traffic situation in the surroundings of the bicycle and a data processing apparatus according to the invention. Thus, the traffic notification device can provide accurate and detailed notifications while at the same time having a long battery life.

The problem is also solved by a bicycle assembly comprising a bicycle and a traffic notification device according to the invention. The traffic notification device is mounted on the bicycle such that the camera unit is facing rearwards. Since the traffic notification device can provide accurate and detailed notifications while at the same time having a long battery life, such a bicycle assembly can be used in a safe manner over a long time.

It is noted that the effects and advantages that have been explained for one of the method according to the invention, the computer program according to the invention, the computer-readable storage medium according to the invention, the data processing apparatus according to the invention, the traffic notification device according to the invention and the bicycle assembly according to the invention apply mutatis mutandis to all the other aspects of the invention.

Examples of the present invention will be described in the following with reference to the drawings.
- Figure 1: shows a traffic situation including a bicycle assembly according to the invention, wherein the bicycle assembly comprises a traffic notification device according to the invention with a data processing apparatus according to the invention, a computer program according to the invention and a computer-readable storage medium according to the invention, wherein the data processing apparatus is able to carry out a method according to the invention,
- Figure 2: shows a portion of the bicycle assembly of Figure 1 in more detail,
- Figure 3: shows the traffic notification device of Figures 1 and 2 in more detail,
- Figure 4: illustrates operational states of a camera unit of the traffic notification device of Figure 3 as well as steps of a method for operating the traffic notification device of Figure 3, and
- Figure 5: shows examples of visual notifications provided by the traffic notification device.

The figures are merely schematic representations and serve only to illustrate examples of the disclosure. Identical or equivalent elements are in principle provided with the same reference signs.

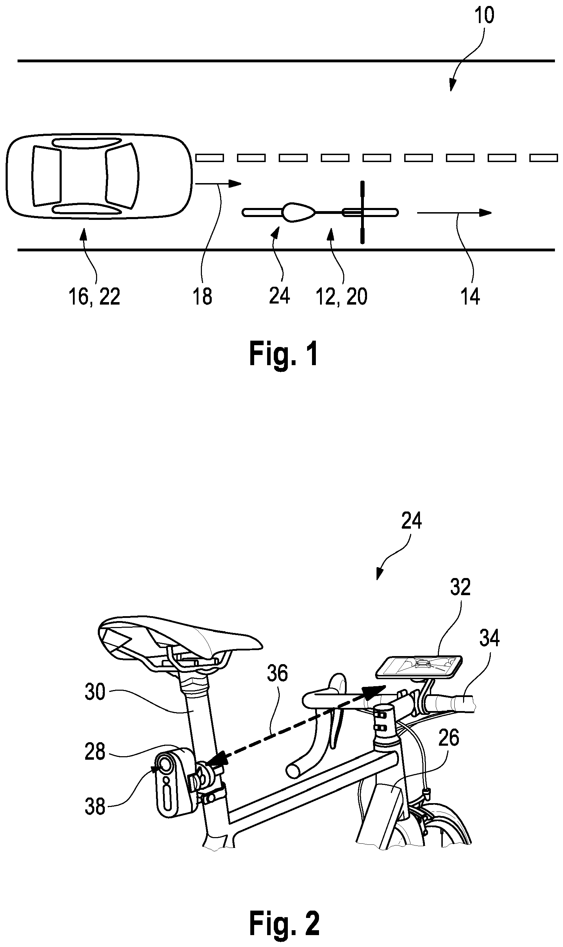

Figure 1 shows a traffic situation wherein on a road 10 a first road user 12 travels along a corresponding first travelling direction 14 and a second road user 16 travels along a corresponding second travelling direction 18.

With respect to the first travelling direction 14, the second road user 16 is located behind the first road user 12. It is noted that this relative orientation of the first road user 12 and the second road user 16 is independent from the fact whether at least one of the first road user 12 and the second road user 16 is moving or not.

In the examples described in connection with the figures, the first road user 12 is a user 20 of a bicycle or cyclist 20. The second road user 16 is a car 22.

In more detail, the first road user 12 is formed by a person which is omitted in the figures for the ease of representation which is using a bicycle assembly 24.

The bicycle assembly 24 is shown in more detail in Figure 2.

The bicycle assembly 24 comprises a bicycle 26 which is only partly shown in Figure 2 and a traffic notification device 28.

In the present example, the traffic notification device 28 is mounted on a seat post 30 of the bicycle 26 such that it faces rearwards, i.e. in an orientation opposite to the first travelling direction 14.

Additionally, a mobile electronic device 32 is mounted on a handle bar 34 of the bicycle 26 such that it is easily visible by the user 20 riding the bicycle 26. The user 20 is not shown in Figure 2.

The traffic notification device 28 and the mobile electronic device 32 are connected by a wireless data connection 36 illustrated by an arrow in Figure 2.

In the present example, the mobile electronic device 32 is a mobile phone, more precisely a smart phone.

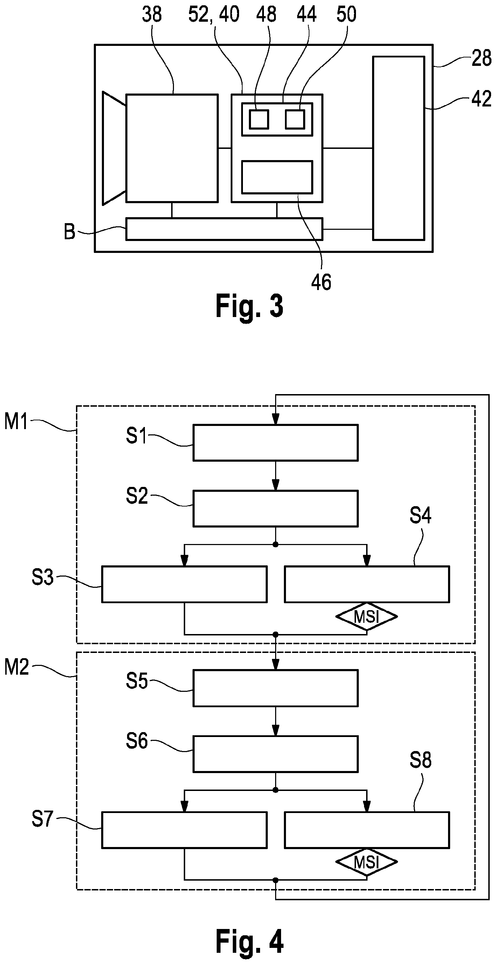

The traffic notification device 28 is shown in more detail in Figure 3.

The traffic notification device 28 comprises a camera unit 38 which is configured for capturing images of a traffic situation in the surroundings of the bicycle 26.

To this end, the traffic notification device 28 is mounted on the bicycle 26 such that the camera unit 38 is facing rearwards.

Moreover, the traffic notification device 28 comprises a data processing apparatus 40.

The data processing apparatus 40 is communicatively connected to the camera unit 38 such that an operation of the camera unit 38 may be controlled by the data processing apparatus 40.

Thus, the data processing apparatus 40 may also be called a camera control unit.

Furthermore, the traffic notification device 28 comprises a communication interface 42.

In the present example, the traffic notification device 28 is communicatively connected to the mobile electronic device 36 via the communication interface 42 and the wireless data connection 36.

The data processing apparatus 40, the camera unit 38 and the communication interface 42 are powered by a battery unit B which is electrically connected to each of the data processing apparatus 40, the camera unit 38 and the communication interface 42.

In the present example, the battery unit B is arranged within the traffic notification device 28.

Alternatively, it is also possible to use a battery unit B which is external to the traffic notification device 28 for powering the data processing apparatus 40, the camera unit 38 and the communication interface 42. Such an external battery unit may be a battery unit of an electric bicycle.

The data processing apparatus 40 comprises a data storage unit 44 and a data processing unit 46.

The data storage unit 44 comprises a computer-readable storage medium 48 and a computer program 50. Both the computer-readable storage medium 48 and the computer program 50 comprise instructions which, when executed by the data processing unit 46, or more generally a computer, cause the data processing unit 46 or computer to carry out a method for operating the traffic notification device 28.

Consequently, both the data processing unit 46 and the data storage unit 44 form means 52 for carrying out a method for operating the traffic notification device 28.

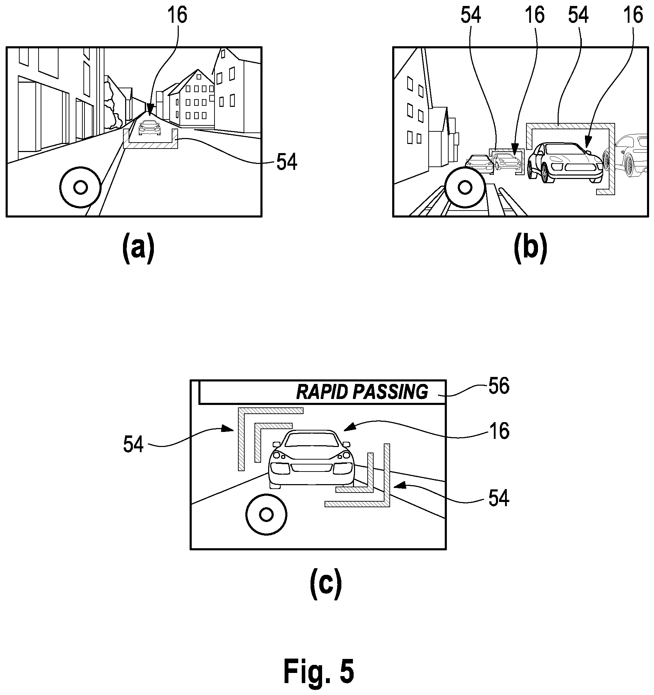

This method will be explained in the following in connection with Figures 4 and 5.

The camera unit 38 is configured to operate according to a first operational mode M1 and according to a second operational mode M2 (cf. Figure 4).

In the first operational mode M1, the camera unit 38 captures images being characterized by a first image parameter which is an image resolution parameter.

In the present example, the first image parameter is a resolution of 480p.

Additionally, since the camera unit 38 is a video camera unit, the first operational mode M1 is characterized by a frame rate of 30 frames per second.

In the second operational mode M2, the camera unit 38 captures images being characterized by a second image parameter which is also an image resolution parameter.

In the present example, the second image parameter is a resolution of 720p.

Additionally, the second operational mode M2 is characterized by a frame rate of 60 frames per second.

Thus, in the present example, the images captured in the second operational mode M2 are of higher quality as compared to the images captured in the first operational mode M1.

Consequently, the second operational mode may be designated as a high quality mode.

However, due to the lower image resolution and the lower frame rate in the first operational mode M1, the camera unit 38 consumes less power when operated in the first operational mode M1. Consequently, the first operational mode may be designated as a low power mode.

Thus, operating the camera unit 38 in the first operational mode M1 leads to a comparatively long battery life of the battery unit B.

The method for operating the traffic notification device 28 comprises triggering the camera unit 38 to operate in the first operational mode M1.

Additionally, the method for operating the traffic notification device 28 comprises triggering the camera unit to operate in the second operational mode M2.

Since in the present example, the first operational mode M1 is a default operational mode, the camera unit 38 is triggered to operate in a first operational mode in a first step S1.

While being operated in the first operational mode M1, a set of images captured by the camera unit 38 is received by the data processing apparatus 40 in a second step S2.

In a third steps S3, the images are provided to the user 20 of the bicycle 26 such that the user 20 can observe the surrounding traffic situation by looking at the images.

To this end, the images are transferred to the mobile electronic device 32 via the communication interface 42 and the wireless data connection 36.

Thus, a digital rear view mirror is provided to the user 20.

In a fourth step S4, which is performed in parallel to the third step S3 by the data processing apparatus 40, the images are analyzed by applying a machine vision technique to the images.

The objective of this analysis is to detect the presence of the second road user 16 in the images.

The presence of the second road user 16 in the images is a mode switching information MSI.

This means that in a case in which the second road user 16 is detected by performing the machine vision technique, the camera unit 38 is triggered to operate in the second operational mode M2 by the data processing apparatus 40. This constitutes a fifth step S5.

In other words, the mode switching information MSI is deducted from the images.

Otherwise, i.e. if no second road user 16 is detected, the camera unit 38 remains in the first operational mode M1. This means that step S1 is performed and the camera unit 38 is triggered to operate in the first operational mode M1. In this case, the performance of steps S2, S3 and S4 is continued.

Also in the second operational mode M2 the camera unit 38 captures images and these images are received by the data processing apparatus 40 in a sixth step S6.

Analogously to the first operational mode M1, also in the second operational mode M2, the images captured by the camera unit 38 are provided to the user 20 of the bicycle 26 in a seventh step S7. Thus, also in the second operational mode M2, the user 20 can observe the surrounding traffic situation by looking at the images.

As before, the images are transferred to the mobile electronic device 32 via the communication interface 42 and the wireless data connection 36.

However, as has already been explained before, the image quality is enhances as compared to the first operational mode M1.

Due to the enhanced image quality in the second operational mode M2, a risk level indicator can now be deducted from the analyzed images in an eighth step S8.

The risk level indicator describes a risk of interference between the bicycle 26 and a road user in the analyzed image, which is the second road user 16 in the present example.

As far as the calculation of the risk level indicator is concerned, reference is made to the above explanations.

Again, analyzing the images comprises applying a machine vision technique.

If the deducted risk level indicator exceeds a predefined risk level threshold which may be stored on the data storage unit 44, the data processing apparatus 40 may trigger a notification via the communication interface 42.

The triggered notification may be a sound signal which is issued by the mobile electronic device 32.

In this example, the seventh step S7 and the eighth step S8 are performed in parallel as shown in Figure 4.

Alternatively or additionally, the notification may be visual.

Examples of visual notifications are shown in Figure 5.

It is noted that in the examples of Figure 5 the visual notification is integrated into the image captured by the camera unit 38 and provided to the user 20 of the bicycle 26 via the wireless data connection 36 and a screen of the mobile electronic device 32.

In such a case, the eighth step S8 needs to be performed before the seventh step S7 in order to be able to integrate the visual notification into the captured image before the image with the integrated visual notification is provided to the user 20.

As can be seen from Figures 5 (a) to 5 (c), the visual notification can comprise different kinds of highlighting bars 54.

Moreover, the notification can comprise a notification banner 56 as shown in Figure 5 (c).

Preferably, the highlighting bars 54 are colored as a function of a magnitude of the risk level indicator. Depending on the magnitude of the risk level indicator, the highlighting bars may be colored, e.g. in green, yellow, orange and/or red.

Thus, if the camera unit 38 is triggered to operate in the second operational mode M2, the user 20 of the bicycle 26 is provided with accurate and detailed notifications about the surrounding traffic and receives a precise information about a risk of interference.

On the data storage unit 44, a further risk level threshold is provided. This risk level threshold may be designated as a lower risk level threshold.

The risk level indicator falling below the lower risk level threshold constitutes a mode switching information MSI.

Consequently, if the risk level indicator falls below the lower risk level threshold, the camera unit is triggered to operate in the first operational mode M1.

### Reference signs

- 10: road
- 12: first road user
- 14: first travelling direction
- 16: second road user
- 18: second travelling direction
- 20: user of a bicycle, cyclist
- 22: car
- 24: bicycle assembly
- 26: bicycle
- 28: traffic notification device
- 30: seat post
- 32: mobile electronic device
- 34: handle bar
- 36: wireless data connection
- 38: camera unit
- 40: data processing apparatus
- 42: communication interface
- 44: data storage unit
- 46: data processing unit
- 48: computer-readable storage medium
- 50: computer program
- 52: means for carrying out a method for operating a traffic notification device
- 54: highlighting bar
- 56: notification banner

- B: battery unit
- M1: first operational mode
- M2: second operational mode
- MSI: mode switching information
- S1: first step
- S2: second step
- S3: third step
- S4: fourth step
- S5: fifth step
- S6: sixth step
- S7: seventh step
- S8: eighth step

## Claims

1. Method for operating a traffic notification device (28) for a bicycle (26), the traffic notification device (28) being configured for being mounted on the bicycle (26) and comprising a camera unit (38) for capturing images of a traffic situation in the surroundings of the bicycle (26), the method comprising:
- triggering the camera unit (38) to operate in a first operational mode (M1), wherein in the first operational mode (M1) the camera unit (38) captures at least one image being **characterized by** a first image quality parameter (S1),
- detecting or receiving a mode switching information (MSI), and
- triggering the camera unit (38) to operate in a second operational mode (M2), wherein in the second operational mode (M2) the camera unit (38) captures at least one image being **characterized by** a second image quality parameter (S5).

2. The method according to claim 1, further comprising:
- receiving at least one image captured by the camera unit (38) (S2, S6),
- analyzing the at least one image and deducting a mode switching information (MSI) from the at least one image (S4, S8).

3. The method according to claim 2, wherein the mode switching information (MSI) is the presence or absence of a road user (16) in the analyzed image.

4. The method according to claim 2 or 3, wherein analyzing the at least one image (S4, S8) comprises applying a machine vision technique.

5. The method according to any one of the preceding claims, wherein the first image quality parameter and the second image quality parameter are at least one of an image resolution parameter and a frame rate parameter.

6. The method according to any one of the preceding claims, further comprising providing the at least one captured image to a user of the bicycle (S3, S7).

7. The method according to any one of the preceding claims, further comprising:
- receiving at least one image captured by the camera unit (38) (S2, S6), and
- analyzing the at least one image and deducting a risk level indicator describing a risk of interference between the bicycle (26) and a road user (16) in the analyzed image, if the camera unit (38) is operated in the one out of the first operational mode (M1) and the second operational mode (M2) in which the corresponding first or second image quality parameter relates to the comparatively higher image quality (S8).

8. The method according to claim 7, wherein analyzing the at least one image (S8) comprises applying a machine vision technique.

9. The method according to claim 7 or 8, wherein a risk level indicator falling below a risk level threshold is a mode switching information (MSI).

10. The method according to any one of the preceding claims, wherein the one out of the first operational mode (M1) and the second operational mode (M2) in which the corresponding first or second image quality parameter relates to the comparatively lower image quality is a default operational mode.

11. A data processing apparatus (40) comprising means (52) for carrying out the method according to any one of the preceding claims.

12. A computer program (50) comprising instructions which, when the computer program (50) is executed by a computer, cause the computer to carry out the method according to any one of claims 1 to 10.

13. A computer-readable storage medium (48) comprising instructions which, when executed by a computer, cause the computer to carry out the method according to any one of claims 1 to 10.

14. A traffic notification device (28) for a bicycle (26), the traffic notification device (28) being configured for being mounted on a bicycle (26), wherein the traffic notification device (28) comprises a camera unit (38) for capturing images of a traffic situation in the surroundings of the bicycle (26) and a data processing apparatus (40) according to claim 11.

15. Bicycle assembly (24) comprising a bicycle (26) and a traffic notification device (28) according to claim 14, wherein the traffic notification device (28) is mounted on the bicycle (26) such that the camera unit (38) is facing rearwards.
